# EUROPEAN PATENT SPECIFICATION

(11) **EP 1 316 405 B1**
(45) Date of publication and mention of the grant of the patent: **03.11.2004**
(21) Application number: 02004272.7
(22) Date of filing: 27.02.2002
(51) Int. Cl.: B29C 45/28, F15B 15/14, F15B 11/028

(54) **Method and device for automatically controlling hydraulic pressure in hydraulic cylinder for hot runners of pressure regulating injection molding machines**
Verfahren und Vorrichtung zur automatischen Druckregelung von hydraulischen Zylindern für Spritzgiessheisskanäle
Procédé et appareil pour le réglage automatique de la pression dans les cylindres hydrauliques pour les canaux chauds de presses à injecter

(30) Priority: 28.11.2001 KR 2001074490
(43) Date of publication of application: 04.06.2003
(73) Proprietor: Yudo Co., Ltd., Hwaseung-Si, Kyounggi-do, 445-911 (KR)
(72) Inventor: Yu, Young-Hee, Seoul, 120-829 (KR)
(74) Representative: Banzer, Hans-Jörg, Dipl.-Ing.

(56) References cited:
- EP-A- 0 269 091
- US-A- 4 755 131
- US-A- 5 483 796

## Description

### BACKGROUND OF THE INVENTION

### Field of the Invention

The present invention relates, in general, to the structure of hydraulic cylinders for hot runners of pressure regulating plastic injection molding machines and, more particularly, to a method and device for automatically controlling hydraulic pressure in such a cylinder by installing a pressure regulating unit at each of two hydraulic ports formed at the upper and lower portions of the cylinder's sidewall, and by automatically draining a predetermined quantity of pressurized oil from the cylinder through either port when the pressure inside the cylinder is excessively increased, thus preventing a piston from being overloaded and preventing carbonization of oil in the cylinder.

### Description of the Prior Art

As well known to those skilled in the art, a hydraulic cylinder for hot runners of pressure regulating plastic injection molding machines has been produced after appropriately designing the cylinder in accordance with desired capacity of a valve pin.

During an injection molding process, hydraulic pressure in the cylinder may be changed, and the pressure applied to the piston of the cylinder may be also changed. When the pressure in the cylinder excessively increases, the injection molds may be damaged at the gates brought into contact with the nozzle of the cylinder. In such a case, the hot runner may fail to perform its desired operation.

Such a hydraulic cylinder for injection molding machines comes into close contact with a heated hot runner, and so actuating oil inside the cylinder may be heated and carbonized.

In a detailed description, the hydraulic cylinder for hot runners of injection molding machines is a small diameter cylinder, and so the quantity of actuation oil contained in the cylinder bore is only several ten milliliters.

Since the actuation oil is contained in the heated cylinder, the cylinder may excessively heat the oil and thereby deteriorate the oil's chemical and physical characteristics, in addition to carbonizing the oil.

During a plastic injection molding process, the actuation oil is repeatedly fed into and drained from the hydraulic cylinder while flowing through a long hydraulic line. It is necessary to use four solenoid valves for controlling the flow of actuation oil relative to one hydraulic cylinder.

In order to prevent the actuation oil from being undesirably discharged from the cylinder through an oil inlet port during an oil draining step, the oil inlet port and the oil outlet port of the cylinder must be provided with solenoid valves, respectively, for forcing the actuation oil to flow in one direction.

The conventional hydraulic cylinder for hot runners thus complicates the construction of a hydraulic circuit. Another problem of the conventional cylinder resides in that it is almost impossible to install the solenoid valves when the cylinder is used with small-sized molds.

U.S. Patent Publication No. 4,755,131 describes a method and a hydraulic cylinder in accordance with the preambles of claims 1 and 2. The cylinder is operated by feeding pressurized oil into the cylinder to move a piston in the cylinder. The oil is drained from the cylinder by opening a hydraulic port which is externally provided in the form of a pressure relief valve.

U.S. Patent Publication No. 5,483,796 describes a fluid cylinder which has pressure controlled opening/closing valves connected thereto. The opening/closing valve includes a spool for closing a supply/discharge path and a spring for biasing the spool.

### SUMMARY OF THE INVENTION

Accordingly, the present invention has been made keeping in mind the above problems occurring in the prior art, and an object of the present invention is to provide a device for automatically controlling hydraulic pressure in a hydraulic cylinder for hot runners of pressure regulating injection molding machines, which is provided with a pressure regulating unit, having both a pressure regulating spring and a pressure regulating head, at each of two hydraulic ports formed at the upper and lower portions of the cylinder's sidewall, and in which one pressure regulating unit automatically opens an associated hydraulic port when a pressure, exceeding a reference level predetermined by both the spring force of the pressure regulating spring and the cross-sectional area of the pressure regulating head, acts on the piston of the cylinder, thus discharging a predetermined quantity of pressurized oil from the cylinder through the open port and thereby maintaining desired constant pressure acting on the piston in the cylinder.

Another object of the present invention is to provide a method and device for automatically controlling hydraulic pressure in a hydraulic cylinder for hot runners of pressure regulating injection molding machines, which continuously receives new oil due to the automatic draining of oil by the operation of the pressure regulating units, thus preventing the oil from being carbonized in the cylinder by heat of the hot runner.

These objects are achieved by a method of automatically controlling hydraulic pressure in a hydraulic cylinder according to claim 1 and a corresponding device according to claim 2. The dependent claim defines a preferred and advantageous embodiment of the invention.

The method of automatically controlling hydraulic pressure in a hydraulic cylinder for hot runners of pressure regulating injection molding machines according to the present invention comprises the steps of: feeding pressurized oil to the hydraulic cylinder to move a piston in the cylinder in a direction by hydraulic pressure of the oil acting on the piston; moving a pressure regulating head in the same direction by the hydraulic pressure of the oil while compressing a.pressure regulating spring when the hydraulic pressure acting on the piston is excessively increased, thus opening a hydraulic port connected to the pressure regulating head and draining the oil from the cylinder through the open hydraulic port; and returning the pressure regulating head to an original position thereof by restoring force of the pressure regulating spring when the hydraulic pressure acting on the piston is reduced and does not overcome the restoring force of the spring due to the draining of the oil from the cylinder through the open hydraulic port.

The device for automatically controlling hydraulic pressure in a hydraulic cylinder for hot runners of pressure regulating injection molding machines according to the present invention comprises a cylinder body movably receiving a piston and having an oil outlet port and an oil inlet port at the upper and lower ends of a sidewall thereof in a way such that the oil outlet port communicates with an upper chamber above the piston and the oil inlet port communicates with a lower chamber under the piston, the oil inlet and outlet ports being capable of feeding and draining pressurized oil into and from the cylinder body; two seating holes axially formed in the sidewall of the cylinder body at diametrically opposite positions so as to allow the upper and lower chambers of the cylinder body to communicate with an oil line outside the cylinder body through the seating holes; and a pressure regulating unit set in each of the two seating holes of the cylinder body and capable of selectively opening the seating hole so as to discharge a predetermined quantity of pressurized oil from the cylinder body to the oil line for maintaining a desired constant hydraulic pressure in the cylinder body, the pressure regulating unit consisting of a pressure regulating head movably seated in a nozzle of the seating hole, a pressure regulating spring set in the seating hole to normally bias the pressure regulating head in a direction for closing the nozzle, and a plug set in the seating hole at a position behind the pressure regulating spring so as to hold the pressure regulating head and spring in the seating hole.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a sectional view showing the construction of a device for automatically controlling hydraulic pressure in a hydraulic cylinder for hot runners of plastic injection molding machines in accordance with the preferred embodiment of the present invention; and
Fig. 2 is a sectional view of a cylinder body of the hydraulic cylinder according to this invention.

### DETAILED DESCRIPTION OF THE INVENTION

Reference now should be made to the drawings, in which the same reference numerals are used throughout the different drawings to designate the same or similar components.

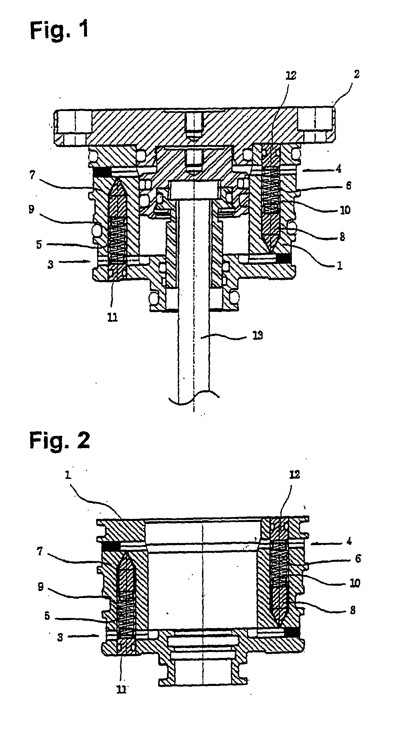

Fig. 1 is a sectional view showing the construction of a device for automatically controlling hydraulic pressure in a hydraulic cylinder for hot runners of plastic injection molding machines in accordance with the preferred embodiment of the present invention. Fig. 2 is a sectional view of a cylinder body of the hydraulic cylinder according to this invention.

As shown in the drawings, the device for automatically controlling hydraulic pressure in the hydraulic cylinder according to this invention comprises a cylinder body 1 covered with a cylinder head la to define a cylinder bore, with a piston 2 movably received in the cylinder bore to define a variable upper chamber and a variable lower chamber in the cylinder body 1. An oil inlet port 3 and an oil outlet port 4 are formed at the lower and upper ends of the sidewall of the cylinder body 1 to communicate with the lower chamber and the upper chamber of the cylinder body 1, respectively. The two oil ports 3 and 4 feed or drain pressurized oil into or from the cylinder body 1. Two seating holes 5 and 6 are axially formed in the sidewall of the cylinder body 1 at diametrically opposite positions such that the lower chamber of the cylinder body 1 may communicate with the oil outlet port 4 through the hole 6 and the upper chamber of the cylinder body 1 may communicate with the oil inlet port 3 through the hole 5. Two pressure regulating units are set in the two seating holes 5 and 6 of the cylinder body 1 so as to selectively open the seating holes 5 and 6 and discharge a predetermined quantity of pressurized oil from the cylinder body 1 for maintaining desired constant hydraulic pressure in the cylinder body 1. Each of the pressure regulating units consists of a pressure regulating head 7 or 8 movably seated in a nozzle of each seating hole 5 or 6, a pressure regulating spring 9 or 10 set in the seating hole 5 or 6 to normally bias the pressure regulating head 7 or 8 in a direction for closing the nozzle, and a plug 11 or 12 set in the seating hole 5 or 6 at a position behind the pressure regulating spring 9 or 10 so as to hold the pressure regulating head 7 or 8 and the pressure regulating spring 9 or 10 in the seating hole 5 or 6. In the drawings, the reference numeral 13 denotes a valve pin connected to the piston 2.

The hydraulic pressure control device of this invention is operated as follows.

When pressurized actuation oil is fed through the oil inlet port 3 into the lower chamber under the piston 2 inside the cylinder body 1, the piston 2 is moved upward in the cylinder body 1 by the hydraulic pressure of the oil.

In such a case, the pressure regulating head 8 associated with the oil outlet port 4 is biased downward by the spring force of its pressure regulating spring 10, thus closing the nozzle of the seating hole 6.

When the piston 2 is fully moved upward to reach its upper dead point and the pressurized oil is further fed into the lower chamber of the cylinder body 1, the hydraulic pressure inside the lower chamber is excessively increased to overcome the spring force of the spring 10 seated in the hole 6 associated with the oil outlet port 4. The pressure regulating head 8 is moved upward while compressing the spring 10 by the hydraulic pressure, thus opening the nozzle of the hole 6.

When the nozzle of the hole 6 is opened as described above, the pressurized oil is discharged from the lower chamber to the oil outlet port 4, and so the hydraulic pressure inside the lower chamber is reduced. When the hydraulic pressure inside the lower chamber is reduced such that the pressure does not overcome the restoring force of the spring 10, the pressure regulating head 8 is elastically moved downward by the restoring force of the spring 10 to close the nozzle of the hole 6.

When the oil flowing direction of the hydraulic cylinder is reversed to move the piston 2 downward in the cylinder body 1, the pressure regulating unit set in the hole 5 is operated to automatically control the hydraulic pressure in the upper chamber above the piston 2 in the cylinder body 1.

That is, when pressurized actuation oil is fed through the oil outlet port 4 into the upper chamber of the cylinder body 1, the piston 2 is moved downward in the cylinder body 1 by the hydraulic pressure of the oil. When the piston 2 is fully moved downward to reach its lower dead point and the pressurized oil is further fed into the upper chamber, the hydraulic pressure inside the upper chamber is excessively increased to overcome the spring force of the spring 9 seated in the hole 5 associated with the oil inlet port 3. The pressure regulating head 7 is moved downward while compressing the spring 9 by the hydraulic pressure, thus opening the nozzle of the hole 5. Therefore, the pressurized oil is discharged from the upper chamber to the oil inlet port 3, and so the hydraulic pressure inside the upper chamber is reduced. When the hydraulic pressure inside the upper chamber is reduced such that the pressure does not overcome the restoring force of the spring 9, the pressure regulating head 7 is elastically moved upward by the restoring force of the spring 9 to close the nozzle of the hole 5. The hydraulic pressure control device of this invention thus automatically controls the hydraulic pressure in the cylinder body 1 such that excessively high pressure does not act on the piston 2. Therefore, the device protects the cylinder body 1 and piston 2 from such excessively high pressure, and allows the valve pin 13 to be operated under desired pressure, thus protecting the gate of hot runners.

In addition, since the hydraulic pressure control device of this invention has two pressure regulating units in the sidewall of the cylinder body at positions corresponding to the oil inlet and outlet ports, it is possible to effectively control the operation of the hydraulic cylinder such that the actuation oil flows in a desired direction using two solenoid valves for lifting and lowering the piston, different from a conventional hydraulic cylinder having four solenoid valves.

As described above, the present invention provides a method and device for automatically controlling hydraulic pressure in a hydraulic cylinder for hot runners of pressure regulating injection molding machines. The device of this invention is provided with a pressure regulating unit, having both a pressure regulating spring and a pressure regulating head, at each of two hydraulic ports formed at the upper and lower portions of the cylinder's sidewall, and makes one pressure regulating unit open an associated hydraulic port when a pressure, exceeding a reference level predetermined by both the spring force of the pressure regulating spring and the cross-sectional area of the pressure regulating head, acts on the piston of the cylinder. A predetermined quantity of pressurized oil is discharged from the cylinder through the open port and thereby maintains desired constant pressure acting on the piston in the cylinder. The device of this invention has a simple construction, and reduces the number of required solenoid valves of the cylinder from four to two, thus being easily produced at low production cost. The device also automatically regulates the hydraulic pressure inside the cylinder, and forces the actuation oil to continuously flow from the cylinder, thus preventing carbonization of the oil in the cylinder.

## Claims

1. A method of automatically controlling hydraulic pressure in a hydraulic cylinder for hot runners of pressure regulating injection molding machines, comprising the steps of:
feeding pressurized oil to a cylinder body (1) to move a piston (2) movably received in said cylinder body (1) in a direction by hydraulic pressure of the oil acting on the piston (2); and
regulating the pressure in said cylinder body (1),
**characterized in that** the pressure regulating step comprises:
moving a pressure regulating head (7, 8), which is set in a seating hole (5, 6) axially formed in a sidewall of said cylinder body (1) and communicating with said cylinder body (1), in the same direction by the hydraulic pressure of the oil while compressing a pressure regulating spring (9, 10) when the hydraulic pressure acting on the piston (2) is excessively increased, thus opening a hydraulic port provided by the seating hole (5, 6) and draining the oil from the cylinder body (1) through the open hydraulic port; and
returning the pressure regulating head (7, 8) to an original position thereof by restoring force of said pressure regulating spring (9, 10) when the hydraulic pressure acting on the piston (2) is reduced and does not overcome the restoring force of the pressure regulating spring (9, 10) due to the draining of the oil from the cylinder body (1).

2. A device for automatically controlling hydraulic pressure in a hydraulic cylinder for hot runners of pressure regulating injection molding machines, comprising:
a cylinder body (1) movably receiving a piston (2) and having an oil outlet port (4) and an oil inlet port (3) at upper and lower ends of a sidewall thereof in a way such that the oil outlet port (4) communicates with an upper chamber above the piston (2) and the oil inlet port (3) communicates with a lower chamber under the piston (2), said oil inlet and outlet ports (3, 4) being capable of feeding and draining pressurized oil into and from the cylinder body (1),
**characterized by**
two seating holes (5, 6) axially formed in the sidewall of said cylinder body (1) at diametrically opposite positions so as to allow the upper and lower chambers of the cylinder body (1) to communicate with an oil line outside the cylinder body (1) through the seating holes (5, 6); and
a pressure regulating unit set in each of the two seating holes (5, 6) of the cylinder body (1) and capable of selectively opening the seating holes (5, 6) of the cylinder body (1) to the oil line for maintaining a desired constant hydraulic pressure in the cylinder body (1), said pressure regulating unit consisting of a pressure regulating head (7, 8) movably seated in a nozzle of the seating hole (5, 6), a pressure regulating spring (9, 10) set in the seating hole (5, 6) to normally bias the pressure regulating head (7, 8) in a direction for closing the nozzle, and a plug (11, 12) set in the seating hole (5, 6) at a position behind the pressure regulating spring (9, 10) so as to hold the pressure regulating head (7, 8) and spring (9, 10) in the seating holes (5, 6).

3. The device according to claim 2, wherein said two seating holes (5, 6) communicate with the oil inlet port (3) and the oil outlet port (4), respectively, and the pressure regulating unit set in each of the two seating holes (5, 6) is capable of draining the pressurized oil from an associated chamber of the cylinder body (1) to an associated one of the oil inlet port (3) and the oil outlet port (4).

## Patentansprüche

1. Verfahren zum automatischen Regeln des hydraulischen Drucks in einem Hydraulikzylinder für Heißkanaldüsen von Druckregel-Spritzgussmaschinen, umfassend die Schritte:
Zufuhren von unter Druck stehendem Öl zu dem Zylindergehäuse (1), um einen in dem Zylindergehäuse (1) beweglich aufgenommenen Kolben (2) durch den auf den Kolben (2) wirkenden hydraulischen Druck des Öls in eine Richtung zu bewegen; und
Regeln des Drucks in dem Zylindergehäuse (1),
**dadurch gekennzeichnet, dass** der Druckregelschritt umfasst:
Bewegen eines Druckregelkopfes (7, 8), welcher in ein axial in einer Seitenwand des Zylindergehäuses (1) ausgebildetes Einsetzloch (5, 6) gesetzt ist und mit dem Zylindergehäuse (1) in Verbindung steht, in die gleiche Richtung durch den hydraulischen Druck des Öls, wobei eine Druckregelfeder (9, 10) zusammengedrückt wird, wenn der auf den Kolben (2) wirkende hydraulische Druck übermäßig ansteigt, wodurch eine durch das Einsetzloch (5, 6) bereitgestellte Hydrauliköffnung geöffnet wird und das Öl durch die offene Hydrauliköffnung aus dem Zylindergehäuse (1) entlassen wird; und
Zurückbringen des Druckregelkopfes (7, 8) in seine Ausgangsstellung durch die Rückstellkraft der Druckregelfeder (9, 10), wenn der auf den Kolben (2) wirkende hydraulische Druck verringert ist und die Rückstellkraft der Druckregelfeder (9, 10) aufgrund des Entlassens des Öls aus dem Zylindergehäuse (1) nicht mehr übersteigt.

2. Vorrichtung zum automatischen Regeln des hydraulischen Drucks in einem Hydraulikzylinder für Heißkanaldüsen von Druckregel-Spritzgussmaschinen, umfassend:
ein Zylindergehäuse (1), das einen Kolben (2) beweglich aufnimmt und an einem oberen und einem unteren Ende seiner Seitenwand eine Ölauslassöffnung (4) und eine Öleinlassöffnung (3) in einer solchen Weise aufweist, dass die Ölauslassöffnung (4) mit einer oberen Kammer oberhalb des Kolbens (2) in Verbindung steht und die Öleinlassöffnung (3) mit einer unteren Kammer unterhalb des Kolbens (2) in Verbindung steht, wobei die Öleinlass- und Ölauslassöffnung geeignet sind, unter Druck stehendes Öl in das Zylindergehäuse (1) zuzuführen bzw. aus dem Zylindergehäuse (1) zu entlassen, **gekennzeichnet durch**
zwei Einsetzlöcher (5, 6), die an diametral gegenüber liegenden Positionen axial in der Seitenwand des Zylindergehäuses (1) ausgebildet sind, so dass sie es der oberen und der unteren Kammer des Zylindergehäuses (1) ermöglichen, mit einer Ölleitung außerhalb des Zylindergehäuses (1) **durch** die Einsetzlöcher in Verbindung zu stehen; und
eine Druckregeleinheit, welche in jedes der zwei Einsetzlöcher (5, 6) des Zylindergehäuses (1) eingesetzt ist und geeignet ist, die Einsetzlöcher (5, 6) des Zylindergehäuses (1) wahlweise zu der Ölleitung zu öffnen, um einen gewünschten konstanten hydraulischen Druck in dem Zylindergehäuse (1) zu halten, wobei die Druckregeleinheit aus einem beweglich in einer Düse des Einsetzlochs eingesetzten Druckregelkopf (7, 8), einer in dem Einsetzloch eingesetzten Druckregelfeder (9, 10), um den Druckregelkopf (7, 8) normal in eine Richtung zum Verschließen der Düse vorzuspannen, und einem Bolzen (11, 12), der in dem Einsetzloch an einer Position hinter der Druckregelfeder (9, 10) eingesetzt ist, um den Druckregelkopf (7, 8) und die Druckregelfeder (9, 10) in dem Einsetzloch zu halten, besteht.

3. Vorrichtung nach Anspruch 2, wobei die zwei Einsetzlöcher (5, 6) mit der Öleinlassöffnung (3) bzw. der Ölauslassöffnung (4) in Verbindung stehen, und die in jedes der beiden Einsetzlöcher (5, 6) eingesetzte Druckregeleinheit geeignet ist, das unter Druck stehende Öl aus einer zugehörigen Kammer des Zylindergehäuses (1) zu einer zugehörigen der Öleinlassöffnung (3) und der Ölauslassöffnung (4) zu entlassen.

## Revendications

1. Procédé pour commander automatiquement la pression hydraulique dans un vérin hydraulique pour des canaux chauffés de presses de moulage par injection à régulation de pression, comportant les étapes consistant à :
alimenter de l'huile sous pression vers un corps cylindrique (1) pour déplacer un piston (2) reçu de manière mobile dans ledit corps cylindrique (1) dans une direction par l'intermédiaire de la pression hydraulique de l'huile agissant sur le piston (2), et
réguler la pression dans ledit corps cylindrique (1), **caractérisé en ce que** l'étape de régulation de pression comporte les étapes consistant à :
déplacer une tête de régulation de pression (7, 8), qui est établie dans un trou de mise en place (5, 6) formé axialement dans une paroi latérale dudit corps cylindrique (1) et communiquant avec ledit corps cylindrique (1), dans la même direction par l'intermédiaire de la pression hydraulique de l'huile tout en comprimant un ressort de régulation de pression (9, 10) lorsque la pression hydraulique agissant sur le piston (2) est augmentée de manière excessive, en ouvrant ainsi un orifice hydraulique fourni par le trou de positionnement (5, 6) et en drainant l'huile à partir du corps cylindrique (1) à travers l'orifice hydraulique ouvert, et
rappeler la tête de régulation de pression (7, 8) vers une position d'origine de celle-ci par une force de rétablissement dudit ressort de régulation de pression (9, 10) lorsque la pression hydraulique agissant sur le piston (2) est réduite et ne surmonte pas la force de rétablissement du ressort de régulation de pression (9, 10) du fait du drainage de l'huile à partir du corps cylindrique (1).

2. Dispositif pour commander automatiquement la pression hydraulique dans un vérin hydraulique pour des canaux chauffés de presses de moulage par injection à régulation de pression, comportant :
un corps cylindrique (1) recevant un piston (2) de manière mobile, et ayant un orifice de sortie d'huile (4) et un orifice d'entrée d'huile (3) au niveau des extrémités supérieure et inférieure d'une paroi latérale de celui-ci, d'une manière telle que l'orifice de sortie d'huile (4) communique avec une chambre supérieure au-dessus du piston (2), et l'orifice d'entrée d'huile (3) communique avec une chambre inférieure sous le piston (2), lesdits orifices d'entrée et de sortie d'huile (3, 4) étant capables d'alimenter et de drainer de l'huile sous pression dans le corps cylindrique (1), et à partir de celui-ci, **caractérisé par**
deux trous de mise en place (5, 6) formés axialement dans la paroi latérale dudit corps cylindrique (1) au niveau de positions diamétralement opposées, de manière à permettre aux chambres supérieure et inférieure du corps cylindrique (1) de communiquer avec une ligne d'huile à l'extérieur du corps cylindrique (1) à travers les trous de mise en place (5, 6), et
une unité de régulation de pression établie dans chacun des deux trous de mise en place (5, 6) du corps cylindrique (1), et capable d'ouvrir de manière sélective les trous de mise en place (5, 6) du corps cylindrique (1) vers la ligne d'huile pour maintenir une pression hydraulique constante souhaitée dans le corps cylindrique (1), ladite unité de régulation de pression étant constituée d'une tête de régulation de pression (7, 8) mise en place de manière mobile dans une buse du trou de mise en place (5, 6), d'un ressort de régulation de pression (9, 10) établi dans le trou de mise en place (5, 6) pour rappeler normalement la tête de régulation de pression (7, 8) dans une direction de fermeture de la buse, et un obturateur (11, 12) établi dans le trou de mise en place (5, 6) dans une position derrière le ressort de régulation de pression (9, 10), de manière à maintenir la tête de régulation de pression (7, 8) et le ressort (9, 10) dans les trous de mise en place (5, 6).

3. Dispositif selon la revendication 2, dans lequel lesdits deux trous de mise en place (5, 6) communiquent avec l'orifice d'entrée d'huile (3) et l'orifice de sortie d'huile (4), respectivement, et l'unité de régulation de pression établie dans chacun des deux trous de mise en place (5, 6) est capable de drainer l'huile sous pression à partir d'une chambre associée du corps cylindrique (1) vers un orifice associé parmi l'orifice d'entrée d'huile (3) et l'orifice de sortie d'huile (4).
